# EUROPEAN PATENT SPECIFICATION

(11) **EP 3 343 757 B1**
(45) Date of publication and mention of the grant of the patent: **15.07.2020**
(21) Application number: 15902921.4
(22) Date of filing: 28.08.2015
(51) Int. Cl.: H02P 27/06, B60L 3/00, B60L 9/24, B60L 7/14, B60L 7/16, B60L 9/18, B60L 58/26

(54) **RAILWAY VEHICLE, AND VEHICLE POWER CONVERSION APPARATUS AND METHOD**
SCHIENENFAHRZEUG SOWIE VORRICHTUNG UND VERFAHREN ZUR FAHRZEUGLEISTUNGSUMWANDLUNG
VÉHICULE FERROVIAIRE, ET APPAREIL ET PROCÉDÉ DE CONVERSION DE PUISSANCE POUR VÉHICULE

(43) Date of publication of application: 04.07.2018
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: UCHIDA, Toshiyuki, Tokyo 105-8001 (JP); OTANI, Hiroaki, Tokyo 105-8001 (JP); MAKINO, Tomoyuki, Tokyo 105-8001 (JP)
(74) Representative: AWA Sweden AB
(86) International application number: PCT/JP2015/074504
(87) International publication number: WO 2017/037795

(56) References cited:
- EP-A1- 2 570 292
- WO-A1-96/09685
- JP-A- S6 460 206
- JP-A- H02 241 364
- JP-A- 2002 247 703
- JP-A- 2002 247 703
- JP-A- 2003 505 002
- JP-A- 2011 239 610

## Description

### FIELD

Embodiments described herein relate generally to a railway vehicle, and a vehicle power converting apparatus and method.

### BACKGROUND

Conventionally, railway vehicles that run by power supplied from an overhead wire have been known.

Such railway vehicles need to stop or control the output of on-board devices including a voltage converter, a power converter, and a drive unit in order to reduce temperature rising to protect the on-onboard devices, in the event that any of the on-board devices exceeds in temperature a given reference temperature.

However, in such conventional technique, stopping the on-board device or controlling the output of the on-board devices may lower the output of the entire train, which may lead to interfering with the on-time operation of the railway vehicles. Such conventional technique is illustrated by JP2002247703A.

In view of the above, an object of the present invention is to provide a railway vehicle, and a vehicle power converting apparatus and method that can prevent on-board devices from stopping or being output-controlled.

### BRIEF DESCRIPTION OF DRAWINGS

FIG. 1 is a schematic configuration diagram of an electric system of a railway vehicle according to a first embodiment.
FIG. 2 is a diagram for explaining a relationship between an overhead wire voltage and a tertiary winding voltage.
FIG. 3 is a schematic explanatory diagram of regenerative power superimposition.
FIG. 4 is an explanatory diagram of a modification of the first embodiment.
FIG. 5 is a schematic configuration diagram of an electric system of a railway vehicle according to a second embodiment.
FIG. 6 is a schematic configuration diagram of an electric system of a railway vehicle according to a third embodiment.
FIG. 7 is a schematic configuration diagram of an electric system of a railway vehicle according to a fourth embodiment.

### DETAILED DESCRIPTION

According to an embodiment, a railway vehicle includes a transformer, a power converting device to be cooled, a driving motor, and a cooling device. The transformer includes a primary winding to be electrically connected to an overhead wire. The power converting device is connected to a secondary winding of the transformer. The driving motor is a device to be cooled, is connected to the power converting device. The cooling device is connected to a tertiary winding of the transformer, to be supplied with regenerative power of the driving motor to perform cooling operation to the devices to be cooled, the regenerative power is boosted in voltage by the power converting device and has superimposed thereon power from the overhead wire via the transformer.

Next, preferred embodiments will be described with reference to the accompanying drawings.

### [1] First Embodiment

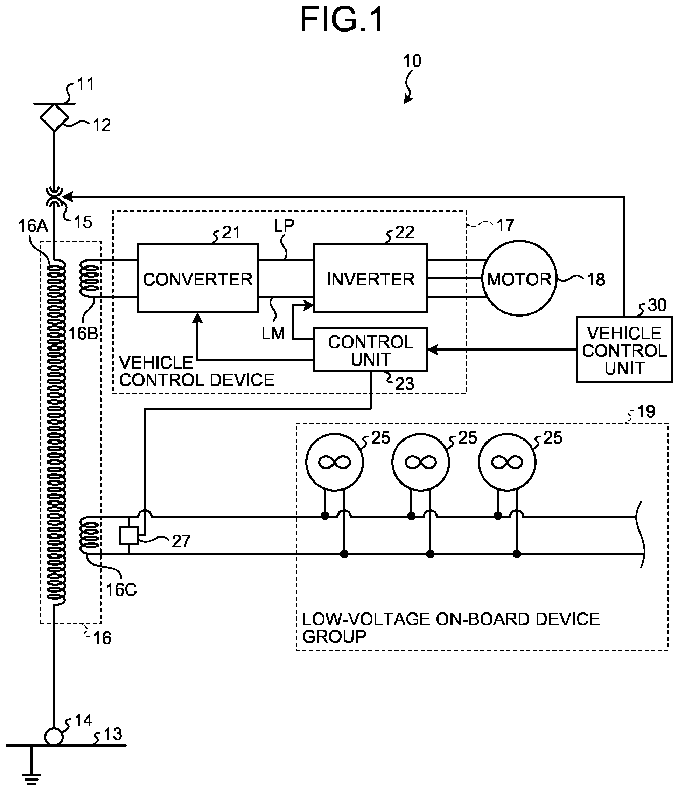

FIG. 1 is a schematic configuration diagram of an electric system of a railway vehicle according to a first embodiment. As illustrated in FIG. 1, a railway vehicle (electric vehicle) 10 in the first embodiment includes a pantograph 12 supplied with alternating-current power from an overhead wire (feeder) 11, a wheel 14 grounded via a railway track 13, and a breaker 15 and a primary winding (primary coil) 16A of a transformer 16 which are connected in series between the pantograph 12 and the wheel 14.

A secondary winding (secondary coil) 16B of the transformer 16 is connected to a driving motor 18 via a vehicle control device 17. The motor 18 is a power source, serving as a generator that supplies regenerative power during regenerative braking.

A tertiary winding (tertiary coil) 16C of the transformer 16 is connected to an low-voltage on-board device group 19. The tertiary winding 16C includes a potential transformer (PT) 27 that measures the output voltage of the tertiary winding 16C and outputs the detected voltage to a control unit 23, as described below.

In such configuration, the breaker 15 is controlled by the vehicle control device 17.

The vehicle control device 17 includes a converter 21, an inverter 22, and the control unit 23. The converter 21 converts, to direct-current power, the alternating-current power from the overhead wire 11 transformed in voltage via the primary winding 16A and the secondary winding 16B of the transformer 16. The inverter 22 converts the direct-current power output from the converter 21 to the alternating-current power again. The control unit 23 controls the converter 21 and the inverter 22 under the control of a vehicle control unit 30.

The low-voltage on-board device group 19 includes a plurality of cooling blowers 25 as cooling devices connected in parallel for cooling the converter 21, the inverter 22, and the motor 18 as devices to be cooled.

In such configuration, the converter 21 and the inverter 22 are controlled by the control unit 23 to convert the regenerative power supplied from the motor 18, and superimpose, for supply, the regenerative power on the power of the tertiary winding 16C supplied from the overhead wire 11 via the secondary winding 16B of the transformer 16.

Next, an operation of the first embodiment will be described.

Herein, it is assumed that the breaker 15 is closed (in ON state) by the vehicle control unit 30.

When the pantograph 12 of the railway vehicle (electric vehicle) 10 is supplied with alternating-current power from the overhead wire (feeder) 11, current flows to the wheel 14 via the breaker 15 and the primary winding 16A of the transformer 16.

Thereby, voltage occurs on the secondary winding 16B of the transformer 16 according to a winding ratio relative to the primary winding 16A. Voltage also occurs on the tertiary winding 16C of the transformer 16 in accordance with a winding ratio relative to the primary winding 16A.

The alternating-current power supplied to the secondary winding 16B is then temporarily converted to direct-current power by the converter 21, and supplied to the inverter 22.

The inverter 22 then converts the direct-current power output from the converter 21 to alternating-current power again, and supplies the alternating-current power to the motor 18. The motor 18 thus drives the wheel 14, moving the railway vehicle 10.

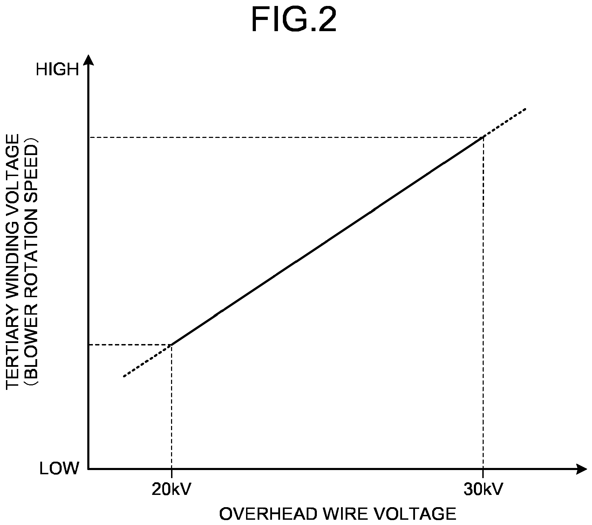

FIG. 2 is a diagram for explaining a relationship between an overhead wire voltage and a tertiary winding voltage.

As illustrated in FIG. 2, the overhead wire voltage and the tertiary winding voltage are proportional to each other.

The rotation speed of the cooling blowers 25 is in proportion to the voltage of the tertiary winding 16C.

That is, the rotation speed of the cooling blowers 25 increases or decreases in proportion to the overhead wire voltage.

The cooling blowers 25 are designed to be operable within an expected range of the overhead wire voltage. Thus, the higher the overhead wire voltage within the range, the higher the rotation speed of cooling fans of the cooling blowers 25 and the higher the cooling performance of the cooling blowers 25.

Conversely, the lower the overhead wire voltage, the lower the rotation speed of the cooling fans and the lower the cooling performance of the cooling blowers 25.

In view of this, in the first embodiment, during regenerative braking the converter 21 and the inverter 22 convert the regenerative power supplied from the motor 18 and superimpose the converted regenerative power on the power of the tertiary winding 16C supplied from the overhead wire 11 via the secondary winding 16B of the transformer 16. This heightens the voltage to supply to the cooling blowers and improves the cooling performance of the cooling blowers 25.

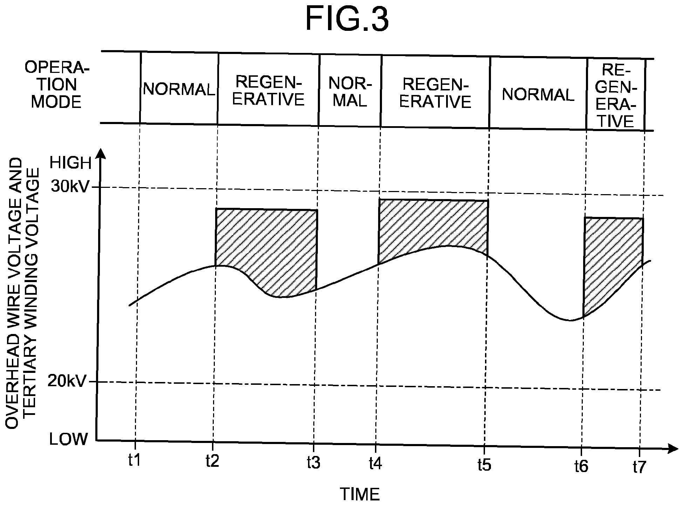

FIG. 3 is a schematic explanatory diagram of regenerative power superimposition.

In the example illustrated in FIG. 3, it is assumed that the voltage of the overhead wire 11 varies within the range of 20 kV to 30 kV.

In FIG. 3 the voltage of the overhead wire 11 varies as illustrated by the solid wavy line, and the motor 18 applies regenerative braking in time periods from time t2 to time t3, from time t4 to time t5, and from time t6 to time t7. In this case the control unit 23 monitors the detected voltage of the potential transformer 27, and controls the converter 21 and the inverter 22 to convert and supply the regenerative power from the motor 18 to the secondary winding 16B, so that the output voltage of the tertiary winding 16C does not exceed the tolerance of the rated input voltage of the cooling blowers 25.

Thereby, as illustrated by the hatched areas in FIG. 3, the regenerative power is superimposed on the power supplied from the overhead wire 11, and is output from the tertiary winding 16C.

In other words, a higher voltage can be supplied to the cooling blowers 25 connected to the tertiary winding 16C.

As a result, with the first embodiment, the rotation speed of the cooling fans of the cooling blowers 25 is increased, improving the cooling performance of the cooling blowers 25, which can prevent the temperatures of the on-board devices, including a voltage converter, a power converter, and a drive unit as devices to be cooled, from exceeding given reference temperatures. This leads to avoiding the on-board devices from stopping or being output-controlled.

Even in the event that stopping the on-board devices to be cooled is inevitable, the amount of temperature rising can be reduced, enabling the cooling to resume at earlier timing and shortening the stop time of the devices.

Thus, more reliable on-time operation of the railway vehicle is feasible without lowering the output of the entire train.

### [1.1] Modification of First Embodiment

The above has described the example of constantly applying higher voltage to the cooling blowers 25 during the regenerative braking. The present modification presents the example of measuring the temperatures of the on-board devices to be cooled (converter 21, inverter 22, and motor 18) and applying higher voltage to the cooling blowers 25 upon prediction that the temperature of an on-board device exceeds a given reference temperature.

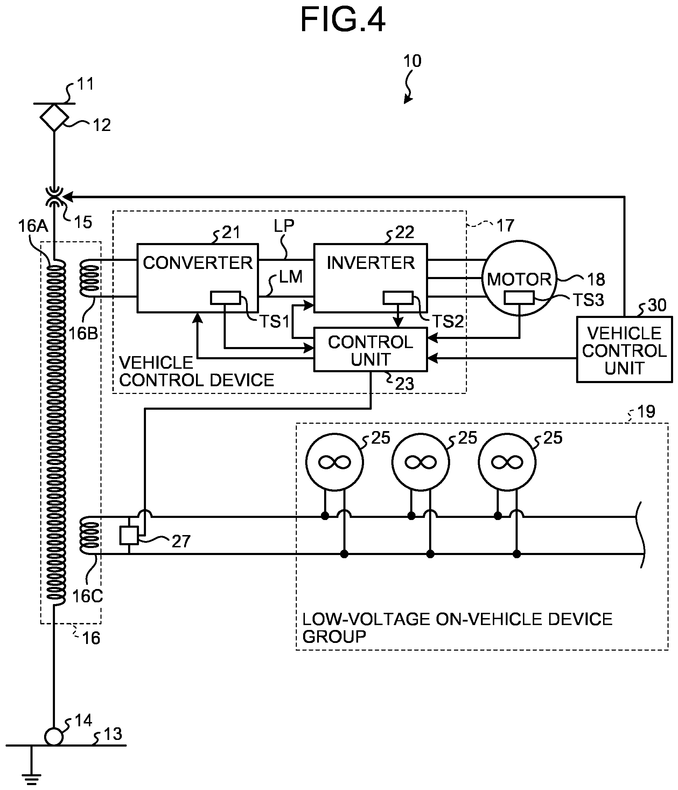

FIG. 4 is an explanatory diagram of the modification of the first embodiment.

In FIG. 4, the same reference numerals denote the same components as those in FIG. 1.

FIG. 4 is different from FIG. 1 in that the electric system additionally includes a temperature sensor TS1 that measures the temperature of the converter 21 and notifies the temperature to the control unit 23, a temperature sensor TS2 that measures the temperature of the inverter 22 and notifies the temperature to the control unit 23, and a temperature sensor TS3 that measures the temperature of the motor 18 and notifies the temperature to the control unit 23.

By such configuration, only upon prediction that the temperature of the converter 21, the inverter 22, or the motor 18 exceeds a corresponding given reference temperature, increased voltage can be applied to the cooling blowers 25 to improve the cooling performance.

Thus, According to the present modification the applied voltage to the cooling blowers 25 can be prevented from rising more than necessary, thereby extending the lifetime of the cooling blowers 25, in addition to the effects of the first embodiment.

### [2] Second Embodiment

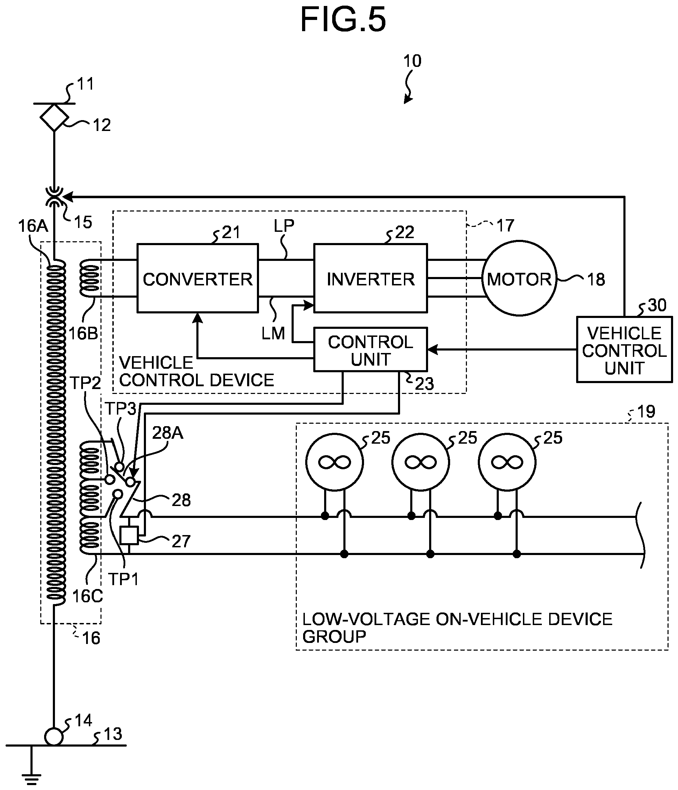

FIG. 5 is a schematic configuration diagram of an electric system of a railway vehicle according to a second embodiment.

In FIG. 5, the same reference numerals denote the same components as those in FIG. 1.

As illustrated in FIG. 5, a railway vehicle (electric vehicle) 10 in the second embodiment includes a pantograph 12 supplied with alternating-current power from an overhead wire (feeder) 11, a wheel 14 grounded via a railway track 13, and a breaker 15 and a primary winding (primary coil) 16A of a transformer 16 that are connected in series between the pantograph 12 and the wheel 14.

A secondary winding (secondary coil) 16B of the transformer 16 is connected to a driving motor 18 via a vehicle control device 17.

A tertiary winding (tertiary coil) 16C of the transformer 16 includes multiple (three in the example of FIG. 5) taps TP1 to TP3 and a tap switcher 28, and is connected to a low-voltage on-board device group 19 via the tap switcher 28. The tertiary winding 16C also includes a power detector 27 that detects the output voltage of the tertiary winding 16C and outputs the detected voltage to the control unit 23.

The tap switcher 28 includes a tap switch 28A for switching the taps, and selectively connects one of the taps TP1 to TP3 under the control of the control unit 23.

Next, an operation of the second embodiment will be described.

Herein, it is assumed that the breaker 15 is closed (in ON state) by a vehicle control unit 30.

When the pantograph 12 of the railway vehicle (electric vehicle) 10 is supplied with alternating-current power from the overhead wire (feeder) 11, current flows to the wheel 14 via the breaker 15 and the primary winding 16A of the transformer 16.

Thereby, voltage occurs on the secondary winding 16B of the transformer 16 in accordance with a winding ratio with respect to the primary winding 16A. Voltage also occurs on the tertiary winding 16C of the transformer 16 in accordance with a winding ratio with respect to the primary winding 16A. In view of this, in the initial state the control unit 23 controls the tap switch 28A to select the tap TP1 with lowest voltage. This is for the purpose of preventing the output voltage of the tertiary winding 16C from rising more than necessary.

As with the first embodiment, during regenerative braking the control unit 23 controls the converter 21 and the inverter 22 to convert the regenerative power supplied from the motor 18. The control unit 23 then superimposes the regenerative power on the power of the tertiary winding 16C supplied from the overhead wire 11 via the secondary winding 16B of the transformer 16, and increases the voltage to supply to the cooling blowers.

The control unit 23 controls the tap switch 28A to select the tap TP2 when the output voltage of the tertiary winding 16C is lower than a given threshold voltage.

The control unit 23 controls the tap switch 28A to select the tap TP3 when with the tap TP2 selected, the output voltage of the tertiary winding 16C is still lower than the given threshold voltage.

Thereby, as illustrated by the hatched areas in FIG. 3, the regenerative power is superimposed on the power supplied from the overhead wire 11, and is output from the tertiary winding 16C. The control unit 23 controls the tap switch 28A to heighten, as much as possible, the voltage to be supplied to the cooling blowers 25 connected to the tertiary winding 16C.

As a result, the second embodiment makes it possible to improve the cooling performance of the cooling blowers 25 in a wider voltage range as well as to prevent of the on-board devices including a voltage converter, a power converter, and a drive unit from rising in temperature above the given reference temperatures, in addition to the effects of the first embodiment. This leads to preventing the on-board devices from stopping or being output-controlled.

Thus, the second embodiment is applicable as the modification of the first embodiment.

### [3] Third Embodiment

A third embodiment concerns boosting the output voltage of the tertiary winding 16C to a constant voltage while effectively using the regenerative power with a static inverter (auxiliary power unit: APU), to constantly maintain the cooling blowers in a highly cooled state.

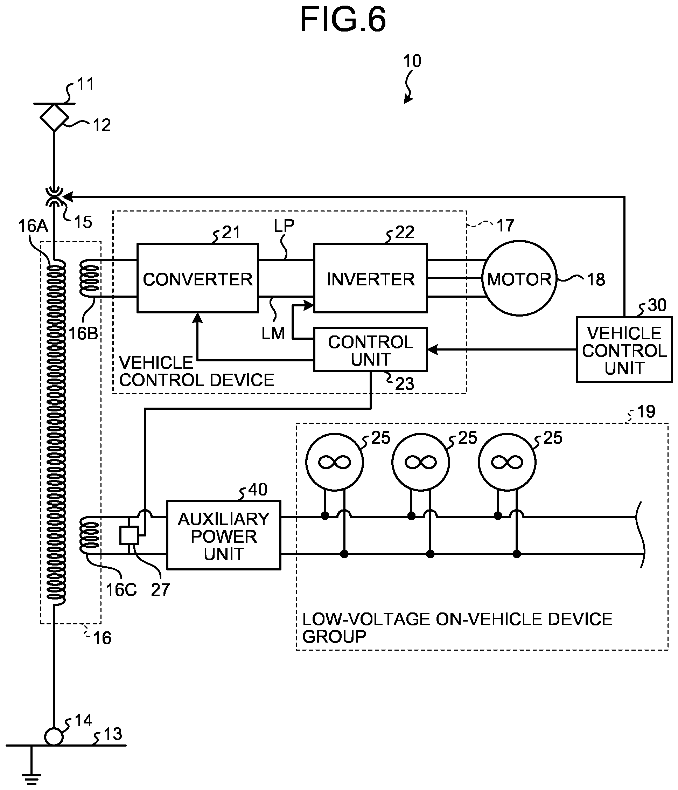

FIG. 6 is a schematic configuration diagram of an electric system of a railway vehicle according to the third embodiment. In FIG. 6, the same reference numerals denote the same components as those in FIG. 1.

As illustrated in FIG. 6, the railway vehicle (electric vehicle) 10 in the third embodiment includes a pantograph 12 supplied with alternating-current power from an overhead wire (feeder) 11, a wheel 14 grounded via a railway track 13, and a breaker 15 and a primary winding (primary coil) 16A of the transformer 16 connected in series between the pantograph 12 and the wheel 14.

A secondary winding (secondary coil) 16B of the transformer 16 is connected to a driving motor 18 via a vehicle control device 17.

A tertiary winding (tertiary coil) 16C of the transformer 16 is connected to a low-voltage on-board device group 19 via a static inverter 40.

Next, an operation of the third embodiment will be described.

Herein, it is assumed that the breaker 15 is closed (in ON state) by a vehicle control unit 30.

When the pantograph 12 of the railway vehicle (electric vehicle) 10 is supplied with alternating-current power from the overhead wire (feeder) 11, current flows to the wheel 14 via the breaker 15 and the primary winding 16A of the transformer 16.

Thereby, voltage occurs on the secondary winding 16B of the transformer 16 in accordance with a winding ratio with respect to the primary winding 16A.

Moreover, power having a voltage according to a winding ratio with respect to the primary winding 16A is output to the tertiary winding 16C of the transformer 16. During the regenerative braking, the converter 21 and the inverter 22 are controlled by the control unit 23 to convert the regenerative power supplied from the motor 18 and output, to the tertiary winding 16C, a superimposed voltage of the regenerative power and the power supplied from the overhead wire 11 via the secondary winding 16B of the transformer 16.

The static inverter 40 then boosts the applied voltage to a constant voltage and supplies the boost voltage to the cooling blowers 25. The constant voltage is set to either a maximum allowable applied voltage of the cooling blowers 25 or a voltage lower than the maximum allowable applied voltage by a given voltage, taking a certain voltage fluctuation into account.

Hence, as with the second embodiment, the third embodiment enables improvement in the cooling performance of the cooling blowers 25 in a wider voltage range than the first embodiment. Thereby, the on-board devices including a voltage converter, a power converter, and a drive unit can be prevented from rising in temperature above their given reference temperatures, leading to preventing the on-board devices from stopping or being output-controlled.

Consequently, the third embodiment is applicable as the modification of the first embodiment.

### [4] Fourth Embodiment

Each of the above embodiments has described the example of the alternating-current overhead wire. A fourth embodiment is adoptable to both of an alternating-current overhead wire and a direct-current overhead wire.

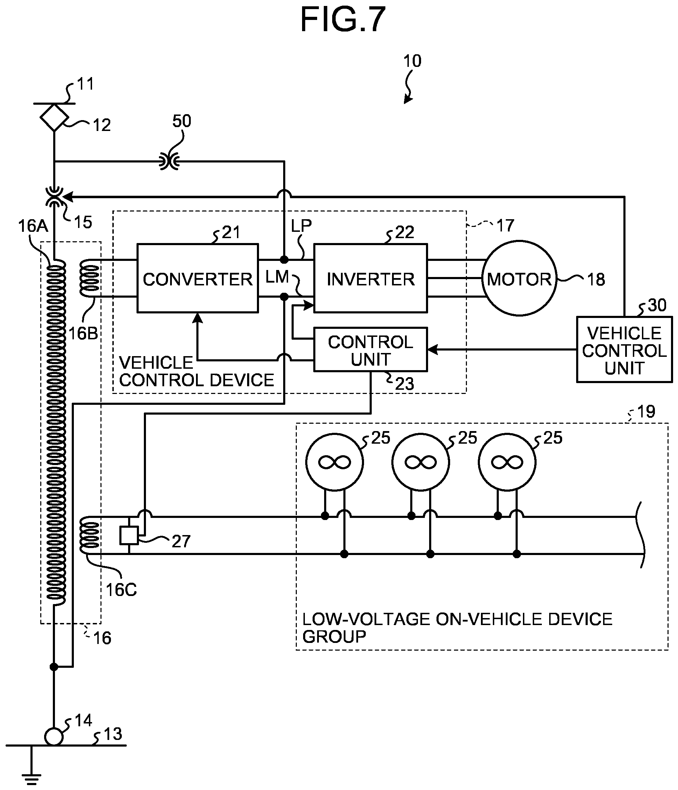

FIG. 7 is a schematic configuration diagram of an electric system of a railway vehicle according to a fourth embodiment.

The fourth embodiment of FIG. 7 is different from the first embodiment of FIG. 1 in that the electric system additionally includes a breaker 50 to be exclusively closed relative to the breaker 15, a high-potential current line LP that electrically connects the converter 21 and the inverter 22, and a low-potential current line LM that electrically connects the converter 21 and the inverter and is grounded 22 via the wheel 14 and the railway track 13. The breaker 50 is connected to the high-potential current line LP.

In such configuration, when the alternating-current overhead wire 11 is used, the breaker 50 is set in open state (OFF state) and the breaker 15 is set in closed state (ON state), whereby the same operation as in the

### first embodiment is feasible.

Thus, in the following, an operation when the direct-current overhead wire 11 is used will be described.

In this case, the vehicle control unit 30 places the breaker 15 in open state (OFF state) and the breaker 50 in closed state (ON state).

As a result, when the pantograph 12 of the railway vehicle (electric vehicle) 10 is supplied with the direct-current power from the overhead wire (feeder) 11, the direct current flows into the converter 21 functioning as an inverter and the inverter 22 via the breaker 50.

Thus, in a normal state, the inverter 22 converts the direct-current power output from the converter 21 to alternating-current power again, and supplies the alternating-current power to the motor 18. The motor 18 then drives the wheel to move the railway vehicle 10.

At the same time, the converter 21 is controlled by the control unit 23 to convert the direct-current power supplied from the direct-current overhead wire 11, and supplies the alternating-current power to the tertiary winding 16C of the transformer 16 via the secondary winding 16B and the primary winding 16A.

As a result, the alternating-current power is supplied to the cooling blowers 25 connected to the tertiary winding 16C, and the cooling blowers 25 cool the devices to be cooled.

Meanwhile, during regenerative braking, the control unit 23 controls the motor 18 to supply regenerative power to the inverter 22, and the inverter 22 converts the regenerative power to direct-current power. The inverter 22 then superimposes the direct-current power on the direct-current power supplied from the direct-current overhead wire 11, and supplies the superimposed direct-current power to the converter 21 functioning as an inverter.

As a result, the converter 21 outputs the superimposed voltage of the regenerative power and the power supplied from the overhead wire 11 to the tertiary winding 16C via the secondary winding 16B of the transformer 16.

In other words, during the regenerative braking the increased voltage can be supplied to the cooling blowers 25 connected to the tertiary winding 16C.

Consequently, with the fourth embodiment, the rotation of the built-in cooling fans of the cooling blowers 25 can be increased during the regenerative braking even when the railway vehicle runs by the power from the direct-current overhead wire.

This can improve the cooling performance of the cooling blowers 25, and prevent the temperatures of the on-board devices to be cooled such as a voltage converter, a power converter, and a drive unit from rising beyond their given reference temperatures, leading to avoiding the on-board devices from stopping or being output-controlled.

Even in the event that stopping the on-board devices to be cooled is inevitable, the degree of temperature rising is reduced, enabling the cooling to resume at an earlier timing and shortening the stop time.

Thus, more reliable on-time operation of the railway vehicle is feasible without lowering the output of the entire train.

The fourth embodiment is applicable as the modification of the first embodiment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the inventions. The accompanying claims and their equivalents are intended to cover such forms or modifications as would fall within the scope of the inventions.

## Claims

1. A railway vehicle (10) comprising:
a transformer (16) including a primary winding (16A) to be electrically connected to an overhead wire;
a first power converting device (21) to be cooled, connected to a secondary winding (16B) of the transformer (16) ;
a driving motor (18) being a device to be cooled, connected to the first power converting device (21); and
a cooling device (25) connected to a tertiary winding (16C) of the transformer (16),
**characterized in that**
the cooling device is supplied with regenerative power of the driving motor (18) to perform cooling operation to the devices to be cooled, the regenerative power being boosted in voltage by the first power converting device (21) and having superimposed thereon power from the overhead wire via the transformer (16).

2. The railway vehicle (10) according to claim 1, further comprising
a temperature detecting device (TS1, TS2, TS3) configured to detect temperatures of the devices to be cooled, wherein
the first power converting device (21) boosts the regenerative power of the driving motor (18) when the temperatures of the devices to be cooled exceed a given reference temperature.

3. The railway vehicle (10) according to claim 1, wherein the tertiary winding (16C) of the transformer (16) includes a plurality of taps (TP1, TP2, TP3),
the taps (TP1, TP2, TP3) are switched so that an output voltage of the tertiary winding (16C) approaches a given reference voltage.

4. The railway vehicle (10) according to claim 3, further comprising
a temperature detecting device (TS1, TS2, TS3) configured to detect temperatures of the devices to be cooled, wherein
the taps (TP1, TP2, TP3) of the transformer (16) are switched when the temperatures of the devices to be cooled exceed a given reference temperature.

5. The railway vehicle (10) according to claim 4, further comprising
a voltage detecting device (27) configured to detect an output voltage of the tertiary winding (16) of the transformer (16), and
a tap switcher (28) configured to switch the taps based on a result of the detection of the voltage detecting device (27).

6. The railway vehicle (10) according to claim 1, further comprising:
a device to be cooled, connected to a secondary winding (16B) of the transformer (16); and
a second power converting device (21) electrically connected to a point between the tertiary winding (16C) of the transformer (16) and the cooling device (25), the second power converting device (40) configured to boost voltage of the tertiary winding (16C) to a given voltage for supply when the temperature of the device to be cooled exceeds a given reference temperature.

7. The railway vehicle (10) according to claim 6, further comprising
a driving motor (18) being the device to be cooled, wherein
the second power converting device (21) superimposes, for supply, regenerative power of the driving motor (18) on power from the overhead wire via the transformer (16).

8. A method to be executed by a vehicle power converting apparatus that comprises: a transformer (16) including a primary winding (16A) to be electrically connected to an overhead wire, a secondary winding (16B) connected to a device to be cooled, and a tertiary winding (16C) connected to a cooling device (25) that cools the device to be cooled; and a power converting device (21) connected to the secondary winding (16A) of the transformer (16) and to a driving motor (18) of a railway vehicle (10), the method being **characterized by**:
converting regenerative power of the driving motor (18) to driving power of the cooling device (25); and
superimposing the driving power on power from the overhead wire and supplying the superimposed power to the cooling device (25) via the secondary winding (16B) and the tertiary winding (16C).

9. The method according to claim 8, wherein the tertiary winding (16C) of the transformer (16) includes a plurality of taps (TP1, TP2, TP3),
the method further comprising:
switching the taps (TP1, TP2, TP3) so that an output voltage of the tertiary winding (16C) approaches a given reference voltage.

## Patentansprüche

1. Schienenfahrzeug (10), umfassend:
einen Transformator (16), der eine Primärwicklung (16A) zur elektrischen Verbindung mit einer Oberleitung aufweist;
eine erste zu kühlende Leistungsumwandlungsvorrichtung (21), die mit einer Sekundärwicklung (16B) des Transformators (16) verbunden ist;
einen Antriebsmotor (18), bei dem es sich um eine zu kühlende Vorrichtung handelt, der mit der ersten Leistungsumwandlungsvorrichtung (21) verbunden ist; und
eine Kühlvorrichtung (25), die mit einer Tertiärwicklung (16C) des Transformators (16) verbunden ist,
**dadurch gekennzeichnet, dass**
die Kühlvorrichtung mit regenerativer Leistung des Antriebsmotors (18) versorgt wird, um einen Kühlvorgang für die zu kühlenden Vorrichtungen durchzuführen, wobei die regenerative Leistung durch die erste Leistungsumwandlungsvorrichtung (21) in der Spannung erhöht wird und über den Transformator (16) mit Leistung von der Oberleitung überlagert wird.

2. Schienenfahrzeug (10) nach Anspruch 1, ferner umfassend
eine Temperaturerfassungsvorrichtung (TS1, TS2, TS3), die dafür ausgelegt ist, Temperaturen der zu kühlenden Vorrichtungen zu erfassen, wobei
die erste Leistungsumwandlungsvorrichtung (21) die regenerative Leistung des Antriebsmotors (18) verstärkt, wenn die Temperaturen der zu kühlenden Vorrichtungen eine gegebene Bezugstemperatur überschreiten.

3. Schienenfahrzeug (10) nach Anspruch 1, wobei die Tertiärwicklung (16C) des Transformators (16) mehrere Anzapfungen (TP1, TP2, TP3) aufweist,
wobei die Anzapfungen (TP1, TP2, TP3) so geschaltet sind, dass sich eine Ausgangsspannung der Tertiärwicklung (16C) einer gegebenen Bezugsspannung annähert.

4. Schienenfahrzeug (10) nach Anspruch 3, ferner umfassend
eine Temperaturerfassungsvorrichtung (TS1, TS2, TS3), die dafür ausgelegt ist, Temperaturen der zu kühlenden Vorrichtungen zu erfassen, wobei
die Anzapfungen (TP1, TP2, TP3) des Transformators (16) geschaltet werden, wenn die Temperaturen der zu kühlenden Vorrichtungen eine gegebene Bezugstemperatur überschreiten.

5. Schienenfahrzeug (10) nach Anspruch 4, ferner umfassend
eine Spannungserfassungsvorrichtung (27), die dafür ausgelegt ist, eine Ausgangsspannung der Tertiärwicklung (16C) des Transformators (16) zu erfassen, und
einen Anzapfungsschalter (28), der dafür ausgelegt ist, die Anzapfungen basierend auf der Erfassung der Spannungserfassungsvorrichtung (27) zu schalten.

6. Schienenfahrzeug (10) nach Anspruch 1, ferner umfassend:
eine zu kühlende Vorrichtung, die mit einer Sekundärwicklung (16B) des Transformators (16) verbunden ist; und
eine zweite Leistungsumwandlungsvorrichtung (21), die elektrisch mit einem Punkt zwischen der Tertiärwicklung (16C) des Transformators (16) und der Kühlvorrichtung (25) verbunden ist, wobei die zweite Leistungsumwandlungsvorrichtung (40) dafür ausgelegt ist, die Spannung der Tertiärwicklung (16C) auf eine gegebene Spannung zur Versorgung zu erhöhen, wenn die Temperatur der zu kühlenden Vorrichtung eine gegebene Bezugstemperatur überschreitet.

7. Schienenfahrzeug (10) nach Anspruch 6, ferner umfassend
einen Antriebsmotor (18), bei dem es sich um die zu kühlende Vorrichtung handelt, wobei
die zweite Leistungsumwandlungsvorrichtung (21), zur Versorgung, regenerative Leistung des Antriebsmotors (18) über den Transformator (16) auf Leistung von der Oberleitung überlagert.

8. Verfahren zur Ausführung durch eine Fahrzeugleistungsumwandlungseinrichtung, die Folgendes umfasst: einen Transformator (16), der eine Primärwicklung (16A) zur elektrischen Verbindung mit einer Oberleitung, eine Sekundärwicklung (16B), die mit einer zu kühlenden Vorrichtung verbunden ist, und eine Tertiärwicklung (16C), die mit einer Kühlvorrichtung (25) verbunden ist, die die zu kühlende Vorrichtung kühlt, aufweist; und eine Leistungsumwandlungsvorrichtung (21), die mit der Sekundärwicklung (16A) des Transformators (16) und mit einem Antriebsmotor (18) eines Schienenfahrzeugs (10) verbunden ist, wobei das Verfahren **gekennzeichnet ist durch**:
Umwandeln von regenerativer Leistung des Antriebsmotors (18) in Antriebsleistung der Kühlvorrichtung (25); und Überlagern der Antriebsleistung auf Leistung von der Oberleitung und Zuführen der überlagerten Leistung über die Sekundärwicklung (16B) und die Tertiärwicklung (16C) der Kühlvorrichtung (25).

9. Verfahren nach Anspruch 8, wobei die Tertiärwicklung (16C) des Transformators (16) mehrere Anzapfungen (TP1, TP2, TP3) aufweist,
das Verfahren ferner umfassend:
Schalten der Anzapfungen (TP1, TP2, TP3) so, dass sich eine Ausgangsspannung der Tertiärwicklung (16C) einer gegebenen Bezugsspannung annähert.

## Revendications

1. Véhicule ferroviaire (10) comprenant :
un transformateur (16) comprenant un enroulement primaire (16A) à relier électriquement à un câble aérien ;
un premier dispositif de conversion de puissance (21) à refroidir, relié à un enroulement secondaire (16B) du transformateur (16) ;
un moteur d'entraînement (18) consistant en un dispositif à refroidir, relié au premier dispositif de conversion de puissance (21) ; et
un dispositif de refroidissement (25) relié à un enroulement tertiaire (16C) du transformateur (16),
**caractérisé en ce que**
le dispositif de refroidissement est alimenté avec une puissance régénérative du moteur d'entraînement (18) pour exécuter une opération de refroidissement sur les dispositifs à refroidir, la puissance régénérative étant amplifiée en tension par le premier dispositif de conversion de puissance (21) et présentant une puissance du câble aérien superposée à celle-ci par le biais du transformateur (16).

2. Véhicule ferroviaire (10) selon la revendication 1, comprenant en outre
un dispositif de détection de température (TS1, TS2, TS3) configuré pour détecter des températures des dispositifs à refroidir, dans lequel
le premier dispositif de conversion de puissance (21) amplifie la puissance régénérative du moteur d'entraînement (18) lorsque les températures des dispositifs à refroidir dépassent une température de référence donnée.

3. Véhicule ferroviaire (10) selon la revendication 1, dans lequel l'enroulement tertiaire (16C) du transformateur (16) comprend une pluralité de prises (TP1, TP2, TP3),
les prises (TP1, TP2, TP3) sont commutées de telle façon qu'une tension de sortie de l'enroulement tertiaire (16C) se rapproche d'une tension de référence donnée.

4. Véhicule ferroviaire (10) selon la revendication 3, comprenant en outre
un dispositif de détection de température (TS1, TS2, TS3) configuré pour détecter des températures des dispositifs à refroidir, dans lequel
les prises (TP1, TP2, TP3) du transformateur (16) sont commutées lorsque les températures des dispositifs à refroidir dépassent une température de référence donnée.

5. Véhicule ferroviaire (10) selon la revendication 4, comprenant en outre
un dispositif de détection de tension (27) configuré pour détecter une tension de sortie de l'enroulement tertiaire (16C) du transformateur (16), et
un commutateur de prise (28) configuré pour commuter les prises sur la base d'un résultat de la détection du dispositif de détection de tension (27).

6. Véhicule ferroviaire (10) selon la revendication 1, comprenant en outre :
un dispositif à refroidir, relié à un enroulement secondaire (16B) du transformateur (16) ; et
un deuxième dispositif de conversion de puissance (21) électriquement relié à un point entre l'enroulement tertiaire (16C) du transformateur (16) et le dispositif de refroidissement (25), le deuxième dispositif de conversion de puissance (40) étant configuré pour amplifier une tension de l'enroulement tertiaire (16C) à une tension donnée à fournir lorsque la température du dispositif à refroidir dépasse une température de référence donnée.

7. Véhicule ferroviaire (10) selon la revendication 6, comprenant en outre
un moteur d'entraînement (18) consistant en le dispositif à refroidir, dans lequel
le deuxième dispositif de conversion de puissance (21) superpose, pour l'alimentation, une puissance régénérative du moteur d'entraînement (18) à une puissance du câble aérien par le biais du transformateur (16).

8. Procédé destiné à être exécuté par un appareil de conversion de puissance de véhicule comprenant : un transformateur (16) comprenant un enroulement primaire (16A) à relier électriquement à un câble aérien, un enroulement secondaire (16B) relié à un dispositif à refroidir, et un enroulement tertiaire (16C) relié à un dispositif de refroidissement (25) refroidissant le dispositif à refroidir ; et un dispositif de conversion de puissance (21) relié à l'enroulement secondaire (16A) du transformateur (16) et à un moteur d'entraînement (18) d'un véhicule ferroviaire (10), le procédé étant **caractérisé par** :
la conversion d'une puissance régénérative du moteur d'entraînement (18) en une puissance d'entraînement du dispositif de refroidissement (25) ; et
la superposition de la puissance d'entraînement à une puissance du câble aérien et l'alimentation du dispositif de refroidissement (25) avec la puissance superposée par le biais de l'enroulement secondaire (16B) et de l'enroulement tertiaire (16C).

9. Procédé selon la revendication 8, dans lequel l'enroulement tertiaire (16C) du transformateur (16) comprend une pluralité de prises (TP1, TP2, TP3),
le procédé comprenant en outre :
la commutation des prises (TP1, TP2, TP3) de telle façon qu'une tension de sortie de l'enroulement tertiaire (16C) se rapproche d'une tension de référence donnée.
